# EUROPEAN PATENT APPLICATION

(11) **EP 2 182 746 A1**
(43) Date of publication of application: **05.05.2010**
(21) Application number: 08831222.8
(22) Date of filing: 11.09.2008
(51) Int. Cl.: H04W 4/00

(54) **MULTI-MEDIA COMMUNICATION METHOD AND NET ELEMENT DEVICE**

(30) Priority: 12.09.2007 CN 200710149590
(71) Applicant: Huawei Technologies Co., Ltd., Longgang District, Shenzhen Guangdong 518129 (CN)
(72) Inventor: ZOU, Zhuyan, Shenzhen Guangdong 518129 (CN); HUANG, Shansong, Shenzhen Guangdong 518129 (CN)
(74) Representative: Körber, Martin Hans
(86) International application number: PCT/CN2008/072332
(87) International publication number: WO 2009/033427

(57) **Abstract**

A multi-media communication method comprises: acquiring media types supported by a calling terminal and a called terminal; and converting the media type during a communication process, where the conversion of the media type comprises converting media streams from the calling terminal into media streams of the media type supported by the called terminal and sending them to the called terminal; and/or converting media streams from the called terminal into media streams of the media type supported by the calling terminal and sending them to the calling terminal. A net element device comprises: a media type acquisition unit configured to acquire media types supported by a calling terminal and a called terminal; and a media type conversion unit configured to convert the media type during a communication process, where the conversion of the media type comprises converting media streams from the calling terminal into media streams of the media type supported by the called terminal and sending them to the called terminal; and/or converting media streams from the called terminal into media streams of the media type supported by the calling terminal and sending them to the calling terminal.

## Description

The present application claims priority of Chinese patent application No. 200710149590.4, entitled "METHOD AND DEVICE FOR MULTI-MEDIA COMMUNICATION" filed on September 12, 2007, which is incorporated by reference herein in its entirety.

### FIELD OF THE INVENTION

The invention relates to the field of communication technology, and more particularly, to a method and device for multi-media communication.

### BACKGROUND

In the field of modern communication technology, the traditional speech communication has no longer been the only choice for the people. Instead, the multi-media communication, such as, instant message, video, etc., has become popular and enriched daily life of people. The multi-media communication technology provided by prior art is implemented when the media type supported by a calling terminal is identical with that supported by a called terminal.

In the research and practice of the prior art, the inventor has discovered that the following problem exists in the prior art.

When the media type supported by the calling terminal is not identical with that supported by the called terminal, the calling terminal can not establish communication with the called terminal, thus a calling subscriber can not communicate with a called subscriber. For example, the calling subscriber is blind and the media type supported by the calling terminal is speech and the called subscriber is deaf-mute and the media type supported by the called terminal is text. Since the media type supported by the calling terminal is not identical with that supported by the called terminal, the calling terminal can not establish communication with the called terminal such that the blind subscriber can not communicate with the deaf-mute subscriber.

### SUMMARY

Embodiments of the present invention provide a multi-media communication method and net element device, which is able to implement communication between a calling terminal and a called terminal when the media type supported by the calling terminal is not identical with that supported by the called terminal.

A method for multi-media communication includes:

acquiring media type supported by a calling terminal and media type supported by a called terminal; and

converting the media type during a communication process, wherein the conversion of the media type includes converting media streams from the calling terminal into media streams of the media type supported by the called terminal and sending the converted media streams to the called terminal or converting media streams from the called terminal into media streams of the media type supported by the calling terminal and sending the converted media streams to the calling terminal.

A net element device includes:

a media type acquisition unit configured to acquire media type supported by a calling terminal and media type supported by a called terminal; and

a media type conversion unit configured to convert the media type during a communication process, wherein the conversion of the media type includes converting media streams from the calling terminal into media streams of the media type supported by the called terminal and sending the converted media streams to the called terminal or converting media streams from the called terminal into media streams of the media type supported by the calling terminal and sending the converted media streams to the calling terminal.

One of the technical solutions according to the embodiments of the present invention provides beneficial effects as follows.

In the embodiments of the present invention, the media type supported by the calling terminal and the media type supported by the called terminal are acquired before call connection. After call connection, the media streams from the calling terminal are converted into the media streams of the media type supported by the called terminal and sent to the called terminal, and/or the media streams from the called terminal are converted into the media streams of the media type supported by the calling terminal and sent to the calling terminal. Therefore, the communication may be established between the calling terminal and the called terminal when the media type supported by the calling terminal is not identical with that supported by the called terminal, and the calling terminal is able to communicate with the called terminal using different types of media streams.

### BRIEF DESCRIPTION OF THE DRAWINGS

Fig.1 is a flow chart illustrating a method for multi-media communication according to one embodiment of the present invention;

Fig.2 is a flow chart illustrating a method for multi-media communication according to one embodiment of the present invention;

Fig.3 is a flow chart illustrating a method for multi-media communication according to one embodiment of the present invention;

Fig.4 is a simple block diagram illustrating a net element device according to one embodiment of the present invention; and

Fig.5 is a simple block diagram illustrating a net element device according to one embodiment of the present invention.

### DETAILED DESCRIPTION

The embodiment of the present invention provides a multi-media communication method including: acquiring media type supported by a calling terminal and media type supported by a called terminal; and converting the media type during a communication process when the media type supported by the calling terminal does not match the media type supported by the called terminal, wherein the conversion of the media type includes converting media streams from the calling terminal into media streams of the media type supported by the called terminal and sending the converted media streams to the called terminal, and/or converting media streams from the called terminal into media streams of the media type supported by the calling terminal and sending the converted media streams to the calling terminal. By using the technical solution provided by the embodiment of the present invention, the communication between the calling terminal and the called terminal may be implemented when the media type supported by the calling terminal is not identical with the media type supported by the called terminal.

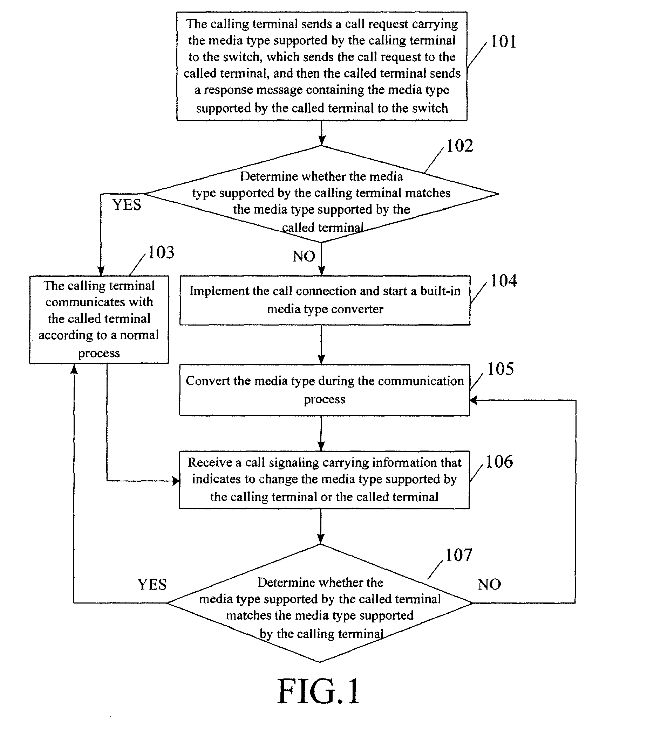

Referring to Fig. 1, a multi-media communication method is provided by one embodiment of the present invention. In the embodiment, a media type converter is built in a switch in order to convert the media streams from the calling terminal into the media streams of the media type supported by the called terminal and send the converted media streams to the called terminal, and/or convert the media streams from the called terminal into the media streams of the media type supported by the calling terminal and send the converted media streams to the calling terminal. The method includes the following specific steps.

Step 101: The calling terminal sends a call request carrying the media type supported by the calling terminal to the switch, which sends the call request to the called terminal, and then the called terminal sends a response message containing the media type supported by the called terminal to the switch after receiving the call request.

Step 102: The switch determines whether the media type supported by the calling terminal matches the media type supported by the called terminal, and step 103 is executed if they match and step 104 is executed if they do not match.

Whether the media type supported by the calling terminal matches the media type supported by the called terminal means whether the media type supported by the calling terminal is identical with the media type supported by the called terminal.

Step 103: The calling terminal communicates with the called terminal according to a normal process. The signaling interaction between the calling terminal and the called terminal is made via the switch to implement call connection to get ready for the communication between the calling terminal and the called terminal, and the calling terminal communicates with the called terminal according to the normal process.

Step 104: The signaling interaction between the calling terminal and the called terminal is made via the switch to implement the call connection, and a built-in media type converter is started to get ready for the communication between the calling terminal and the called terminal.

Step 105: The media type converter built in the switch converts the media type during the communication process, where the conversion of the media type includes converting the media streams from the calling terminal into the media streams of the media type supported by the called terminal and sending the converted media streams to the called terminal, and/or converting the media streams from the called terminal into the media streams of the media type supported by the calling terminal and sending the converted media streams to the calling terminal.

The multi-media communication method provided by this embodiment may further include the following steps after the step 103 or step 105.

Step 106: The switch receives a call signaling carrying information that instructs to change the media type supported by the calling terminal or the called terminal.

Step 107: The switch determines whether the media type supported by the called terminal matches that supported by the calling terminal, and the step 103 is executed if they match and the step 105 is executed if they do not match.

In this embodiment, the media type supported by the calling terminal and the media type supported by the called terminal may be notified to the switch through signaling interaction before the call connection. Alternatively, the media types supported by the calling terminal and the called terminal may also be notified to the switch through other ways before the call connection without affecting the implementation of the embodiment of the present invention. For example, the calling terminal and the called terminal may preset their media types respectively supported by them via the built-in application programs or device management application programs and send the media types to the media type converter built in the switch.

In the step 106, the switch receives the call signaling carrying information that instructs to change the media type supported by the calling terminal or the called terminal to learn that the media type supported by the calling terminal or the called terminal is changed. Alternatively,, the switch may also learn that the media type supported by the calling terminal or the called terminal is changed in other ways, e.g. by sending information that instructs to change the media type supported by the calling terminal using the application programs built in the calling terminal or device management application programs, and/or by sending information that instructs to change the media type supported by the called terminal using the application programs built in the called terminal or device management application programs.

In this embodiment, the switch acquires the media types supported by the calling terminal and the media types supported by the called terminal during the signaling interaction before the call connection, converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal such that the communication can be established between the calling terminal and the called terminal when the media type supported by the calling terminal is not identical with that supported by the called terminal and the calling terminal is able to communicate with the called terminal by using different types of media streams. In addition, during the communication process, in the event that the media type supported by the calling terminal is changed, the switch converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal, such that the calling terminal maintains the communication with the called terminal.

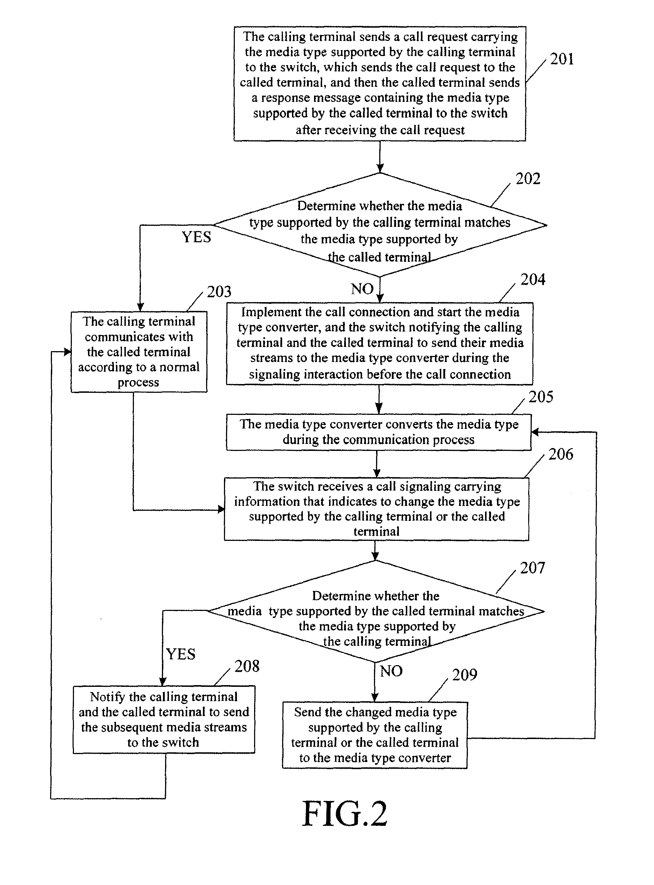

Referring to Fig. 2, a multi-media communication method is provided by one embodiment of the present invention. In this embodiment, the media type supported by the calling terminal and the media type supported by the called terminal are notified to the switch through the signaling interaction before the call connection and forwarded to the media type converter by the switch. The media type converter, as an independent entity, converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal. The method includes the following specific steps.

Step 201: The calling terminal sends a call request carrying the media type supported by the calling terminal to the switch, which sends the call request to the called terminal, and then the called terminal sends a response message containing the media type supported by the called terminal to the switch after receiving the call request.

Step 202: The switch determines whether the media type supported by the calling terminal matches the media type supported by the called terminal, and step 203 is executed if they match and step 204 is executed if they do not match.

Step 203: The calling terminal communicates with the called terminal according to a normal process. The signaling interaction between the calling terminal and the called terminal is made via the switch to implement the call connection to get ready for the communication between the calling terminal and the called terminal, and the calling terminal communicates with the called terminal according to the normal process.

Step 204: The signaling interaction between the calling terminal and the called terminal is made via the switch to implement the call connection, and the switch sends the media type supported by the calling terminal and the media type supported by the called terminal to the media type converter, which is started to get ready for the communication between the calling terminal and the called terminal. During the signaling interaction between the switch and the calling terminal and between the switch and the called terminal, the switch notifies the calling terminal and the called terminal to send their media streams to the media type converter.

Step 205: The media type converter converts the media type during the communication process, where the conversion of the media type includes converting the media streams from the calling terminal into the media streams of the media type supported by the called terminal and sending the converted media streams to the called terminal, and/or converting the media streams from the called terminal into the media streams of the media type supported by the calling terminal and sending the converted media streams to the calling terminal.

The multi-media communication method provided by this embodiment may further include the following steps after the step 203 or 205.

Step 206: The switch receives a call signaling carrying information that instructs to change the media type supported by the calling terminal or the called terminal.

Step 207: The switch determines whether the media type supported by the called terminal matches the media type supported by the calling terminal, and step 208 is executed if they match and step 209 is executed if they do not match.

Step 208: By way of the signaling interaction, the switch notifies the calling terminal and the called terminal to send the subsequent media streams to the switch and the step 203 is executed, in which the calling terminal communicates with the called terminal according to a normal process.

Step 209: The switch sends the changed media type supported by the calling terminal or the called terminal to the media type converter and the step 205 is executed.

In the step 206, the switch receives the call signaling carrying information that instructs to change the media type supported by the calling terminal or the called terminal to learn that the media type supported by the calling terminal or the called terminal is changed. Alternatively, the switch may also learn that the media type supported by the calling terminal or the called terminal is changed in other ways, e.g. by sending information that instructs to change the media type supported by the calling terminal using the application programs built in the calling terminal or device management application programs, and/or by sending information that instructs to change the media type supported by the called terminal using the application programs built in called the terminal or device management application programs.

In this embodiment, during the signaling interaction before the call connection, the switch receives the media type supported by the calling terminal and the media type supported by the called terminal and forwards them to the media type converter. After the call connection, the media type converter converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal, such that the communication can be established between the calling terminal and the called terminal when the media type supported by the calling terminal is not identical with that supported by the called terminal and the calling terminal is able to communicate with the called terminal using different types of media streams. In addition, during the communication process, in the event that the media type supported by the calling terminal is changed, the media type converter converts the media streams from the calling terminal into the media streams of the media type supported by the called terminal and sends the converted media streams to the called terminal, and/or converts the media streams from the called terminal into the media streams of the changed media type supported by the calling terminal and sends the converted media streams to the calling terminal such that the calling terminal maintains the communication with the called terminal.

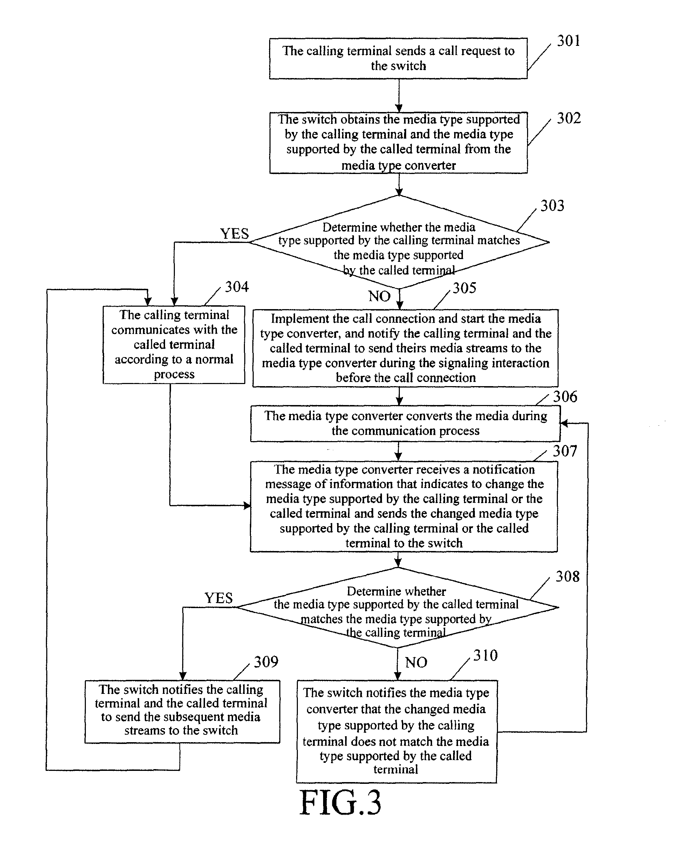

Referring to Fig. 3, a multi-media communication method is provided by one embodiment of the present invention. In this embodiment, the calling terminal and the called terminal may preset the media types respectively supported by them via application programs or device management application programs built in the terminal and send information on the media types respectively supported by them to the media type converter. The media type converter, as an independent entity, converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal. The method includes the following specific steps.

Step 301: The calling terminal sends a call request to the switch.

Step 302: The switch acquires the media type supported by the calling terminal and media type supported by the called terminal from the media type converter.

Alternatively, the following step may be executed before the step 302: The calling terminal and the called terminal may preset the media types respectively supported by them via application programs built in the terminal or device management application programs and then send the media types respectively supported by them to the media type converter; or the following step may be executed before the step 302: pre-store, in the media type converter, the corresponding media type supported by each terminal in a network.

In the step 302, the switch may acquire the media type supported by the calling terminal and the media type supported by the called terminal by enquiring the media type converter. Alternatively, the switch may also acquire the media type supported by the calling terminal and the media type supported by the called terminal in other ways without affecting the implementation of the embodiments of the present invention. For example, the media type converter may notify the switch of the media type supported by the calling terminal and the media type supported by the called terminal initiatively, after receiving the media type supported by the calling terminal and the media type supported by the called terminal.

Step 303: The switch determines whether the media type supported by the calling terminal matches the media type supported by the called terminal, and step 304 is executed if they match and step 305 is executed if they do not match.

Step 304: The calling terminal communicates with the called terminal according to a normal process. The signaling interaction between the calling terminal and the called terminal is made via the switch to implement to the call connection to get ready for the communication between the calling terminal and the called terminal, and the calling terminal communicates with the called terminal according to the normal process.

Step 305: The signaling interaction between the calling terminal and the called terminal is made via the switch to implement the call connection, and the media type converter is started to get ready for the communication between the calling terminal and the called terminal. During the signaling interaction between the switch and the calling terminal and between the switch and the called terminal, the switch notifies the calling terminal and the called terminal to send their media streams to the media type converter.

Step 306: The media type converter converts the media type during the communication process, where the conversion of the media type includes converting the media streams from the calling terminal into the media streams of the media type supported by the called terminal and sending the converted media streams to the called terminal, and/or converting the media streams from the called terminal into the media streams of the media type supported by the calling terminal and sending the converted media streams to the calling terminal.

The multi-media communication method provided by this embodiment may further include the following steps after the step 304 or 306.

Step 307: The media type converter receives a notification message of information that instructs to change the media type supported by the calling terminal or the called terminal and sends the changed media type supported by the calling terminal or the called terminal to the switch.

In the step 307, the notification message of information that instructs to change the media type supported by the calling terminal may be sent via application programs built in the calling terminal or device management application programs, and the notification message of information that instructs to change the media type supported by the called terminal may be sent via application programs built in the called terminal or device management application programs.

Step 308: The switch determines whether the media type supported by the calling terminal matches the media type supported by the called terminal, and step 309 is executed if they match and step 310 is executed if they do not match.

Step 309: By way of the signaling interaction, the switch notifies the calling terminal and the called terminal to send the subsequent media streams to the switch and the step 304 is executed, in which the calling terminal communicates with the called terminal according to a normal process.

Step 310: The switch notifies the media type converter that the changed media type supported by the calling terminal does not match that supported by the called terminal and the step 306 is executed.

In this embodiment, it is the switch that determines whether the media type supported by the calling terminal matches the media type supported by the called terminal. In practice, however, the media type converter may also determine whether the media type supported by the calling terminal matches the media type supported by the called terminal without effecting the implementation of the embodiment of present invention. For example, before the call connection, the media type converter receives a notification message from the switch that enquires whether the media type supported by the calling terminal matches the media type supported by the called terminal, determines whether the media type supported by the calling terminal matches the media type supported by the called terminal, and sends the result of determination to the switch. The switch executes a normal calling process if the result is positive, and the switch notifies the calling terminal and the called terminal to send their respective media streams to the media type converter if the result is negative. After the call connection, during the communication process, the media type converter receives a notification message of information that instructs to change the media type supported by the calling terminal or the called terminal, determines whether the media type supported by the calling terminal matches the media type supported by the called terminal, and sends a notification message that the media type supported by the calling terminal matches the media type supported by the called terminal to the switch if they match. The switch notifies the calling terminal and the called terminal to send the media streams to the switch by way of the signaling interaction and the calling terminal communicates with the called terminal according to the normal process.

In this embodiment, the switch acquires the media type supported by the calling terminal and the media type supported the called terminal from the media type converter. After the call connection, the media type converter converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal, such that the communication can be established between the calling terminal and the called terminal when the media type supported by the calling terminal is not identical with that supported by the called terminal and the calling terminal is able to communicate with the called terminal by using different types of media streams. In addition, during the communication process, in the event that the media type supported by the calling terminal is changed, the media type converter converts the media streams from the calling terminal into the media streams of the media type supported by the called terminal and sends the converted media streams to the called terminal, and/or converts the media streams from the called terminal into the media streams of the changed media type supported by the calling terminal and sends the converted media streams to the calling terminal, such that the calling terminal maintains the communication with the called terminal.

The above embodiments describe a technical solution in which the media type coverer is built in the switch to implement the embodiments of the present invention or a technical solution in which the media type coverer is used as an independent entity to implement the embodiments of the present invention. Alternatively, the media type converter may also be built in the called terminal without affecting the implementation of the present invention.

The media types mentioned in the embodiments of the present invention include but are not limited to the following: (1) Speech; (2) Text, such as instant message, short message, e-mail, etc.; and (3) video or image. The speech and instant message are used more frequently in real-time communication. The implementation of the media type converter may be based on three conventional technologies: Automatic Speech Recognition (ASR) technology which converts speech into text; Text To Speech (TTS) technology; and Image Recognition technology which may convert image into speech or text.

A person with ordinary skill in the art will understand that all or part of steps in the embodiments of the present invention described above may be accomplished by associated hardware instructed by programs, which may be stored in a computer readable storage medium, such as, read only memory, magnetic disk or optical disk.

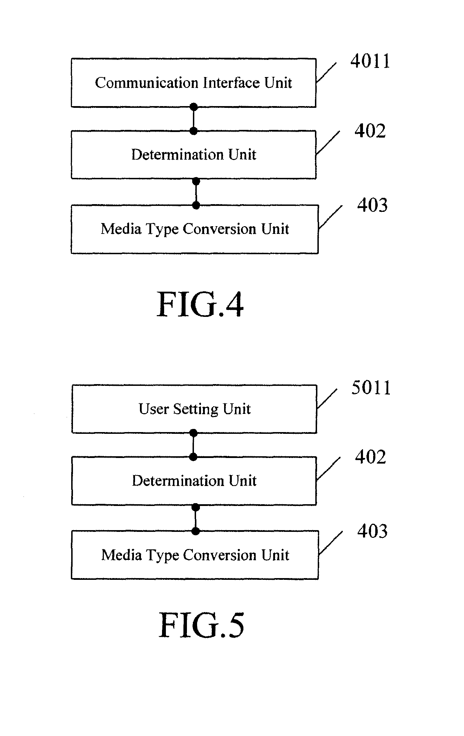

Referring to Fig. 4 to 5, a net element device is provided by one embodiment of the present invention. The net element device includes a media type acquisition unit, a determination unit 402 and a media type conversion unit 403.

Specifically, the media type acquisition unit acquires media type supported by a calling terminal and media type supported by a called terminal. The acquired media type supported by the calling terminal and the media type supported by the called terminal are acquired before call connection, or the acquired media type supported by the calling terminal and the media type supported by the called terminal are the changed media types acquired after the call connection. The determination unit 402 determines whether the media type supported by the calling terminal matches the media type supported by the called terminal. The media type conversion unit 403 converts the media type if the result of determination of the determination unit 402 is negative, i.e., converts media streams from the calling terminal into media streams of the media type supported by the called terminal and sends the converted media streams to the called terminal and/or converts media streams from the called terminal into media streams of the media type supported by the calling terminal and sends the converted media streams to the calling terminal.

Alternatively, the net element device may be an independent media type converter or located on the switch.

Alternatively, the net element device may not include the determination unit 402. It can be seen from the embodiment illustrated in Fig. 2 and the embodiment illustrated in Fig. 3 according to the present invention, when the net element device is an independent media type converter, the independent media type converter may convert the media types directly after receiving the media streams from the calling terminal and the called terminal without determining whether the media type supported by the calling terminal matches the media type supported by the called terminal, thereby implementing the embodiments of the present invention.

Referring to Fig. 4, the media type acquisition unit may be a communication interface unit 4011 configured to fulfill signaling interaction between the calling terminal and the called terminal and receive the media type supported by the calling terminal and the media type supported by the called terminal during the signaling interaction.

Likewise, referring to Fig. 5, the media type acquisition unit may be a user setting unit 5011 configured to receive the media type supported by the calling terminal and sent from device management application programs or application programs in the calling terminal, and receive the media type supported by the called terminal and sent from device management application programs or application programs in the called terminal.

The net element device may be located in the switch. Alternatively, the net element device may also be located in the called terminal without affecting the implementation of the embodiments of the present invention. When the net element device is located in the called terminal, the media type conversion unit 403 converts the media streams from the calling terminal into the media streams of the media type supported by the called terminal and sends the converted media streams to an output unit of the called terminal, which outputs the media streams of the media type supported by the called terminal.

In this embodiment, the media type acquisition unit acquires the media type supported by the calling terminal and the media type supported by the called terminal. After the call connection, the media type conversion unit 403 converts the media streams from the calling terminal into the media streams of the media type supported by the called terminal and sends the converted media streams to the called terminal, and/or converts the media streams from the called terminal into the media streams of the media type supported by the calling terminal and sends the converted media streams to the calling terminal such that the communication can be established between the calling terminal and the called terminal when the media type supported by the calling terminal is not identical with that supported by the called terminal and the calling terminal is able to communicate with the called terminal by using different types of media streams. In addition, during the communication process, the media type acquisition unit is able to acquire the changed media type supported by the calling terminal, and the media type conversion unit 403 converts the media streams from the calling terminal into the media streams of the media type supported by the called terminal and sends the converted media streams to the called terminal, and converts the media streams from the called terminal into the media streams of the changed media type supported by the calling terminal and sends the converted media streams to the calling terminal such that the calling terminal maintains the communication with the called terminal.

A multi-media communication method and net element device provided by the present invention are described in detail hereinabove. It should be understood by those skilled in the art that the specific embodiment and application scope may be varied according to the principle of the present invention. In a word, the contents of the present invention should not be interpreted as a limitation to the present invention.

## Claims

1. A multi-media communication method comprising:
acquiring media type supported by a calling terminal and media type supported by a called terminal; and
converting the media type during a communication process, wherein the conversion of the media type comprises converting media streams from the calling terminal into media streams of the media type supported by the called terminal and sending the converted media streams to the called terminal, and/or converting media streams from the called terminal into media streams of the media type supported by the calling terminal and sending the converted media streams to the calling terminal.

2. The method according to claim 1, wherein the acquiring media type supported by a calling terminal and media type supported by a called terminal further comprises:
receiving a call request carrying the media type supported by the calling terminal and acquiring the media type supported by the calling terminal from the call request;
forwarding the call request to the called terminal; and
receiving a response message carrying the media type supported by the called terminal and acquiring the media type supported by the called terminal from the response message, the response message being sent after the called terminal receives the call request.

3. The method according to claim 1, wherein the acquiring media type supported by a calling terminal and media type supported by a called terminal further comprises:
receiving the media type supported by the calling terminal sent from device management application programs or application programs in the calling terminal; and
receiving the media type supported by the called terminal sent from device management application programs or application programs in the called terminal.

4. The method according to claim 1, wherein the acquiring media type supported by a calling terminal and media type supported by a called terminal further comprises:
receiving, by a media type converter, the media type supported by a calling terminal and the media type supported by a called terminal sent from a switch; and
converting, by the media type converter, the media type during the communication process,
wherein the media type supported by the calling terminal is acquired by the switch from the call request sent by the calling terminal, the media type supported by the called terminal is acquired by the switch from the response message sent by the called terminal, and the response message is sent after the called terminal receives the call request forwarded by the switch.

5. The method according to claim 3 or 4, wherein, before the converting the media type during the communication process, the method further comprises:
notifying, by a switch, the calling terminal and the called terminal to send their media streams to the media type converter during signaling interaction before call connection.

6. The method according to claim 5, wherein, before notifying, by the switch, the calling terminal and the called terminal to send their media streams to the media type converter, the method further comprises:
determining, by the switch, whether the media type supported by the calling terminal matches the media type supported by the called terminal, and continuing to execute the step of notifying, by the switch, the calling terminal and the called terminal to send their media streams to the media type converter if the media type supported by the calling terminal does not match the media type supported by the called terminal; or
determining, by the media type converter, whether the media type supported by the calling terminal matches the media type supported by the called terminal, sending the result of determination to the switch, and continuing to execute the step of notifying, by the switch, the calling terminal and the called terminal to send their media streams to the media type converter if the result is negative.

7. The method according to any one of claims 1 to 4, wherein, after the converting the media type during the communication process, the method further comprises:
receiving information that instructs to change the media type supported by the calling terminal or the called terminal; and
repeating the step of converting the media type during the communication process if the media type supported by the called terminal does not match the media type supported by the calling terminal.

8. The method according to claim 7, wherein the receiving information that instructs to change the media type supported by the calling terminal or the called terminal further comprises:
receiving a call signaling carrying information that instructs to change the media type supported by the calling terminal or the called terminal.

9. The method according to claim 7, wherein the receiving information that instructs to change the media type supported by the calling terminal or the called terminal further comprises:
receiving a notification message of information that instructs to change the media type supported by the calling terminal, which is sent via device management application programs or application programs in the calling terminal, or receiving a notification message of information that instructs to change the media type supported by the called terminal, which is sent via device management application programs or application programs in the called terminal.

10. A net element device comprises:
a media type acquisition unit configured to acquire media type supported by a calling terminal and media type supported by a called terminal; and
a media type conversion unit configured to convert the media type during a communication process, wherein the conversion of the media type comprises converting media streams from the calling terminal into media streams of the media type supported by the called terminal and sending the converted media streams to the called terminal; and/or converting media streams from the called terminal into media streams of the media type supported by the calling terminal and sending the converted media streams to the calling terminal.

11. The net element device according to claim 10, wherein the media type acquisition unit is a communication interface unit configured to fulfill signaling interaction between the calling terminal and the called terminal and receive the media type supported by the calling terminal and the media type supported by the called terminal during the signaling interaction.

12. The net element device according to claim 10, wherein the media type acquisition unit is a user setting unit configured to receive the media type supported by the calling terminal sent from device management application programs or application programs in the calling terminal and receive the media type supported by the called terminal sent from device management application programs or application programs in the called terminal.

13. The net element device according to any one of claims 10 to 12, further comprising:
a determination unit configured to determine whether the media type supported by the calling terminal matches the media type supported by the called terminal, and
the media type conversion unit configured to convert the media type during a communication process if the result of determination of the determination unit is negative.
